(19) Europäisches Patentamt
European Patent Office
Office européen des brevets

(11) Veröffentlichungsnummer: **0 003 479**
**B1**

# (12) EUROPÄISCHE PATENTSCHRIFT

(45) Veröffentlichungstag der Patentschrift: **16.09.81**

(51) Int. Cl.³: **C 08 G 59/62**

(21) Anmeldenummer: **78101778.5**

(22) Anmeldetag: **20.12.78**

## (54) Härtungsmittel und Verfahren zur Herstellung von Epoxid-Polyaddukten.

(30) Priorität: **11.02.78 DE 2805853**
**31.05.78 DE 2823682**

(43) Veröffentlichungstag der Anmeldung:
**22.08.79 Patentblatt 79/17**

(45) Bekanntmachung des Hinweises auf die Patenterteilung:
**16.09.81 Patentblatt 81/37**

(84) Benannte Vertragsstaaten:
**BE CH DE FR GB IT LU NL SE**

(56) Entgegenhaltungen:
**CA - A - 662 682**
**FR - A - 2 193 852**
**GB - A - 1 212 276**
**US - A - 3 701 640**

(73) Patentinhaber: **SCHERING AKTIENGESELLSCHAFT**
**Berlin und Bergkamen**
**Müllerstrasse 170/178 Postfach 65 0311**
**D-1000 Berlin 65 (DE)**

(72) Erfinder: **Goeke, Ulrich**
**Hülsdunkel 13**
**D-4670 Lünen (DE)**
Erfinder: **Richter, Michael, Dr.**
**Kranenkamp 2**
**D-4750 Unna (DE)**

(74) Vertreter: **Wallis, Martin, Dr. et al,**
**c/o SCHERING AKTIENGESELLSCHAFT** Berlin und
**Bergkamen Waldstrasse 14 Postfach 1 540**
**D-4619 Bergkamen (DE)**

**EP 0 003 479 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Härtungsmittel und Verfahren zur Herstellung von Epoxid-Polyaddukten

Das erfindungsgemäße Verfahren betrifft Härtungsmittel und ein Verfahren zur Herstellung von Epoxid-Polyaddukten unter Mitverwendung von modifizierten beschleunigten Aminoamiden, Aminoimidazolinen, imidazolinhaltigen Aminoamiden und Polyaminen.

Die erfindungsgemäßen Härter ermöglichen die Herstellung von bei tiefen Temperaturen klebfrei aushärtenden Filmen.

Die erfindungsgemäßen Härter zeichnen sich durch eine relativ lange Topfzeit bei relativ kurzer Härtungszeit aus.

Als Tieftemperaturhärter für Epoxidharze werden üblicherweise beschleunigte Polyamine eingesetzt. Zu ihrer Herstellung setzt man üblicherweise Phenol oder andere aromatische Hydroxyverbindungen, Polyamin und Formaldehyd unter Wasserabspaltung ein.

In der US—PS 3 701 640 werden Reaktionsprodukte aus Monocarbonsäuren, Polyaminen, substituierten Phenolen und Formaldehyd beschrieben, die formalgemäß als Mannichbasen definiert werden. Nach allgemeinem chemischem Fachwissen entspricht diese Formel aber nicht dem tatsächlichen Reaktionsverlauf.

Die Reaktion verläuft nämlich wenig selektiv. Abhängig vom gewählten Molverhältnis der Komponenten liegen in den so hergestellten Härtern noch 15—30% unumgesetztes Phenol vor. Das freie Phenol wird bei der Amin-Epoxid-Reaktion nicht in das Netzwerk eingebaut und liegt als extrahierbarer Bestandteil vor. Nach allgemeiner Auffassung gelten aber Produkte, die mehr als 5% Phenol enthalten, als giftig und müssen als solche deklariert werden.

Polyaminoamide als Härter für Epoxidharze haben den Vorteil, daß die erhaltenen Filme hartelastisch sind, daß das Mischungserhältnis mit Epoxidharzen unkritisch ist und daß sie weniger toxisch und weniger flüchtig als Polyamine sind. Ein gewisser Nachteil von Aminoamidhärtern liegt darin, daß bei tiefen Temperaturen (<10°C) nur eine unvollständige Aushärtung erfolgt und daß sie bei hoher Luftfeuchte klebrige Oberflächen und trübe Filme bilden.

In der FR—PS 2 193 852 werden Härtungsmittel für wässrige Epoxidharzdispersionen auf der Basis von Aminoamid - Epoxidharz - Addukten und Phenol - Formaldehyd - Amin - Kondensationsprodukten beschrieben. Für diese Härtungsmittel ist die Adduktbildung des Aminoamids mit dem Epoxidharz zwingend. Weiterhin liegen die Addukte und die Mannichbasen physikalisch gebunden als Assoziate vor; eine chemische Reaktion der Mannichbase mit dem Addukt unter Aminaustausch von sekundärem Amin findet nicht statt.

Der Erfindung liegt die Aufgabe zugrunde, diese Nachteile zu überwinden und ein Mittel sowie ein Verfahren zu finden, das die klebfreie Aushärtung von Glycidylverbindungen bei tiefen Temperaturen und hohen Luftfeuchten ermöglicht und kein freies Phenol enthält.

Diese Aufgabe wird erfindungsgemäß dadurch gelöst, daß man zur Herstellung von Epoxid-Polyaddukten das durch die Ansprüche gekennzeichnete Verfahren und die erfindungsgemäßen Härtungsmittel anwendet. Die erfindungsgemäßen Härtungsmittel sind Umsetzungsprodukte von Mannichbasen aus Phenol, sekundären Monoaminen und Formaldehyd mit Aminoamiden und/oder Polyaminen unter Aminaustausch und Abspaltung von sekundärem Amin.

Als Aminoamide, Aminoimidazoline und imidazolingruppenhaltige Aminoamide sind die als Härtungsmittel für Epoxidverbindungen zum Stand der Technik gehörenden Verbindungen, wie sie beispielsweise aus den deutschen Patentschriften 972 757, 1 074 856, den deutschen Auslegeschriften 1 041 246, 1 089 544, 1 106 495, 1 295 869, 1 250 918, den britischen Patentschriften 803 517, 810 348, 873 224, 865, 656, 956 709, der belgischen Patentschrift 593 299, der französischen Patentschrift 1 264 244, sowie den US-Patentschriften 2 705 223, 2 712 001, 2 881 194, 2 966 478, 3 002 941, 3 062 773 und 3 188 566 bekannt sind, geeignet.

Als vorteilhaft für das erfindungsgemäße Verfahren haben sich Aminoamide, Aminoimidazoline und imidazolingruppenhaltige Aminoamide erwiesen, welche hergestellt werden durch Umsetzung von

s 1) Monocarbonsäuren, wie gradkettigen oder verzweigten Alkylcarbonsäuren mit 2 bis 22 Kohlenstoffatomen, insbesondere mit 2 bis 4 und 16 bis 22, bevorzugt mit 18 C-Atomen, wie Essigsäure, Propionsäure, Buttersäure, Capronsäure, Caprylsäure, Caprinsäure, Laurinsäure, Myristinsäure sowie insbesondere die natürlichen Fettsäuren wie Stearin-, Öl-, Linol-, Linolen-, Tallölfettsäure oder

s 2) die durch Polymerisation von ungesättigten natürlichen und synthetischen einbasischen aliphatischen Fettsäuren mit 16 bis 22 Kohlenstoffatomen, bevorzugt 18 Kohlenstoffatomen, nach bekannten Methoden erhältlichen sogenannten dimeren Fettsäuren (vgl. z. B. DE—OS 1 443 938, DE—OS 1 443 968, DE—PS 2 118 702 und DE—AS 1 280 852). Typische im Handel erhältliche polymerisierte Fettsäuren haben etwa folgende Zusammensetzung:

| | |
|---|---|
| monomere Säuren | 5—15 Gew.-% |
| dimere Säuren | 60—80 Gew.-% |
| trimere und höherfunktionelle Säuren | 10—35 Gew.-% |

Es können jedoch auch Fettsäuren verwendet werden, deren trimerer und höherfunktioneller Gehalt oder deren Dimeranteil durch geeignete Destillationsverfahren angereichert worden ist oder Fettsäuren, die nach bekannten Verfahren hydriert worden sind oder

3) aus ungesättigten höheren Fettsäuren mit 16—22, insbesondere 18 Kohlenstoffatomen oder deren Ester mit aromatischen Vinylverbindungen durch Copolymerisation erhaltenen Carbonsäuren (z. B. GB—PS 803 517) oder

s 4) Addukten aus ungesättigten höheren Fettsäuren oder Fettsäureestern mit ungesättigten niederen Mono- oder Dicarbonsäuren bzw. -anhydriden wie Fumarsäure, Maleinsäure, Maleinsäureanhydrid oder Acrylsäure (z. B. DE—AS 1 295 829, DE—AS 1 420 761, DE—AS 1 272 918) oder

s 5) Säuren, die durch Umsetzung von ungesättigten Fettsäuren, Kohlenmonoxyd und Wasser hergestellt werden (z. B. Reppe und Kroper, Ann., 582, S. 63—65 (1953), DE—PS 1 006 849) oder

s 6) epoxidierten ungesättigten höheren Fettsäuren (z. B. DE—AS 1 041 246) oder

s 7) aliphatischen, hydroaromatischen, araliphatischen und aromatischen Di- und Polycarbonsäuren mit 6 bis 36 Kohlenstoffatomen, insbesondere 6 bis 14 C-Atomen, wie die homologe Reihe der gesättigten Dicarbonsäuren, insbesondere Adipinsäure, Azelainsäure, Sebazinsäure sowie Decamethylendicarbonsäure und Brassylsäure oder Trimethyladipinsäure (DE—OS 1 745 452) oder die in der US—PS 3 993 661 beschriebene $C_{36}$-Dicarbonsäure oder als hydroaromatische Dicarbonsäuren : 1,4-Cyclohexandicarbonsäure oder als araliphatische Dicarbonsäuren, Phenylendiessigsäure oder als aromatische Dicarbonsäuren, Terephthalsäure, Isophthalsäure, oder

s 8) Säuren, hergestellt durch Addition von Phenol bzw. dessen Substitutionsprodukten an ungesättigte Monocarbonsäuren (z. B. DE—OS 1 543 754) wie Hydroxyphenylstearinsäure oder 2,2 - Bis - (hydroxyphenyl) - valeriansäure oder Additionsprodukte von Phenol an Polycarbonsäuren, wie dimere Fettsäure (z. B. US—P 3 468 920) oder

s 9) Aminosäuren bzw. Lactamen wie ε -Aminocapronsäure oder Laurinlaktam (z. B. 1 694 958)

mit Polyaminen im Verhältnis von Amingruppen: Carboxylgruppen von >1.

Im allgemeinen werden die Säuren der obengenannten Gruppen für sich für die Kondensation mit den Polyaminen eingesetzt, man kann aber auch Mischungen verwenden. Eine besondere Bedeutung in der Technik haben die Polyaminoamide und Polyaminoimidazoline der unter s 1) und s 2) genannten monomeren bzw. polymeren Fettsäuren erlangt, die daher für das erfindungsgemäße Verfahren bevorzugt eingesetzt werden.

Als erfindungsgemäß verwendete Aminkomponenten zur Herstellung der Komponente A) werden Polyamine wie

p 1) Polyäthylenpolyamine, wie Diäthylentriamin, Triäthylentetramin, Tetraäthylenpentamin (z. B. DE—OS 1 543 754) oder

p 2) Polypropylenpolyamin, sowie die durch Cyanäthylierung von Polyaminen, insbesondere des Äthylendiamins und anschließende Hydrierung erhaltenen Polyamine (Firmenprospekt der BASF AG, 1976)) oder

p3) aliphatische Polyamine, wie Diaminoäthan, Diaminopropan, Diaminobutan, Diaminohexan, 3,3,5(3,5,5) - Trimethyl - 1,6 - diaminohexan, oder

p 4) cycloaliphatische Polyamine, wie 1 - Amino - 3 - aminomethyl - 3,5,5 - trimethyl - cyclohexan (Isophorondiamin), 1,4 - Diaminocyclohexan (z. B. DE—AS 1 694 958) oder

p 5) heterocyclische Polyamine wie N - Aminoäthyl - piperazin oder

p 6) Polyätheramine, hergestellt durch Cyanäthylierung von Alkanolen mit mindestens 2 Hydroxylgruppen und anschließende Hydrierung, wie 1,12 - Diamino - 4,8 - dioxadodecan oder

Mischung von zwei oder mehreren der unter p 1) bis p 6) genannten Amine eingesetzt. Erfindungsgemäß bevorzugt werden die unter p 1) und p 2) genannten Polyamine eingesetzt.

Als erfindungsgemäß mitzuverwendende Aminoamide bzw. imidazolingruppenhaltige Aminoamide sind deren Addukte mit Glycidylverbindungen, wie sie beispielsweise aus der DE—AS 1 494 524, der DE—AS 1 520 918 sowie der US—PS 2 970 971 bekannt sind, ebenfalls geeignet.

Als erfindungsgemäß zum Aminaustausch mit den Mannichbasen verwendete Aminkomponenten werden Polyamine wie

p' 1) Polyäthylenpolyamine, wie Diäthylentrimin, Triäthylentetramin, Tetraäthylenpentamin (z. B. DE—OS 1 543 754) oder

p' 2) Polypropylpolyamin, sowie die durch Cyanäthylierung von Polyaminen, insbesondere des Äthylendiamins und anschließende Hydrierung erhaltenen Polyamine (Firmenprospekt der BASF, 1976) oder

p' 3) aliphatische Polyamine, wie Diaminoäthan, Diaminopropan, Neopentandiamin, Diaminobutan, Diaminohexan,3,3,5(3,5,5)-Trimethyl-1,6-diaminohexan und/oder

p' 4) cycloaliphatische Polyamine, wie 1-Amino-3-amino-methyl - 3,5,5 - trimethylcyclohexan (Isophorondiamin), 1,4-Diaminocyclohexan (z. B. DE—AS 1 694 958) und/oder

p' 5) heterocyclische Polyamine wie N-Aminoäthyl - piperazin und/oder

p' 6) Polyätheramine, hergestellt durch Cyanäthyllierung von Alkanolen mit mindestens 2 Hydroxylgruppen und anschließende Hydrierung, wie 1,12-Diamino-4,8-dioxadodecan, und/oder

p' 7) Polyätherpolyamine der allgemeinen Formel

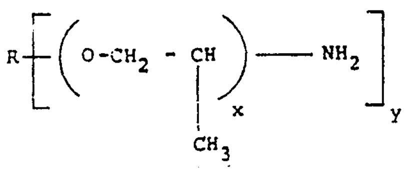

in welcher x ≧ 2, insbesondere 2 — 20, y = 2,3,4 und R ein Kohlenwasserstoffrest mit einer Wertigkeit entsprechend y ist und/oder

p' 8) aromatische Amine oder

Mischungen von zwei oder mehreren der unter p' 1) bis p' 8) genannten Amine eingesetzt. Erfindungsgemäß bevorzugt werden die unter p' 1) unter p' 2) genannten Polyamine eingesetzt.

Die Aminaustauschreaktion erfolgt, wenn Mannichbase und Aminoamid bzw. Polyamin, gegebenenfalls unter Mitverwendung von inerten Lösungsmitteln, unter Rühren auf Temperaturen von > 100°C, vorzugsweise von 130°C bis 180°C erhitzt werden. Das innerhalb von 0,5 bis 3 Stunden freiwerdende sekundäre Amin wird in eine gekühlte Vorlage destilliert. Nach gaschromatischer Analyse ist das abdestillierte Amin so rein, daß es ohne weitere Aufbereitung wieder zur Herstellung der Ausgangsmannichbase eingesetzt werden kann.

Das sekundäre Amin muß so augewählt werden, daß zum eingesetzten Polyamin eine ausreichende Differenz der Siedepunkte besteht. Falls die Reaktionstemperatur über der Siedetemperatur des Polyamins liegt, muß das Reaktionsgefäß einen ausreichend wirkungsvollen Fraktionieraufsatz tragen, um Verluste an Polyamin zu vermeiden.

Als Mannichbasen im Sinne der vorstehenden Erfindung sind Umsetzungsprodukte aus Phenolen, Formaldehyd und sekundären Monoaminen zu verstehen. Als Phenole können eingesetzt werden Monophenole wie Phenol, ortho, -metha, -para-Kresol, die isomeren Xylenole, paratertiär - Butyl - Phenol, para-Nonylphenol, α-Naphthol, β-Naphthol sowie Di- und Polyphenole wie Resorcin, Hydrochinon, 4,4'-Dioxydiphenyl, 4,4'-Dioxydiphenyläther, 4,4'-Dioxydiphenylsulfon, 4,4'-Dioxydiphenylmethan, Bisphenol A, sowie die als Novolake bezeichneten Kondensationsprodukte aus Phenol und Formaldehyd.

Als sekundäre Amine können eingesetzt werden: Dimethylamin, Diäthylamin, Dipropylamin, Dibutylamin, Piperidin, Pyrolidin, Morpholin und Methylpiperazin.

Eine umfassende Aufzählung der einsetzbaren Phenole und Amine findet sich in M. Tramontini, Syntheses 1973, S. 703. Bezüglich Herstellung der Mannichbasen wird ebenfalls auf diese Literaturstelle verwiesen.

Die Molmengen Formaldehyd und Amin pro Mol Phenol richten sich nach der Anzahl der substitutionsfähigen Gruppen: Im Phenol sind es 3, im Bisphenol A 4, im paratertiär - Butyl - Phenol 2.

Die erfindungsgemäß bevorzugt verwendeten Mannichbasen sind die Reaktionsprodukte aus Phenol oder Bisphenol A, Formaldehyd und Dimethylamin mit 1 bis 4 tertiären Amingruppen.

Werden als Phenolkomponente Novolake eingesetzt, werden Mannichbasen mit bis zu 10 und mehr tertiären Amingruppen erhalten.

Bei der Umsetzung der Mannichbasen mit Aminoamiden und/oder Polyaminen können alle tertiären Aminogruppen der Mannichbasen ausgetauscht werden. Die erfindungsgemäß bevorzugt verwendeten Härtungsmittel auf Basis von Polyaminoamiden, Aminoimidazolinen und imidazolinhaltigen Polyaminoamiden enthalten jedoch noch mindestens eine tertiäre Aminogruppe im Molekül.

Die erfindungsgemäß verwendeten Härter können mit besonderem Vorteil eingesetzt werden, wenn bei tiefen Temperaturen und großer relativer Luftfeuchtigkeit gearbeitet werden muß. Dies ist vor allem bei Außenanwendungen im Beschichtungs- und Bausektor der Fall, wo bei Temperaturen um 5°C bereits mit relativen Luftfeuchtigkeiten um 95% gerechnet werden muß.

Weitere Anwendungsgebiete auf denen die erfindungsgemäßen Härtungsmittel zur Herstellung von Epoxid-Polyaddukten mit Vorteil eingesetzt werden können, liegen im Gießharzsektor, im Klebemittelsektor sowie in der Herstellung von Laminaten.

Die bisher bekannten Tieftemperaturhärter aus Phenol, Polyamin und Aldehyd haben den Nachteil, daß sie im Gemisch mit üblichen Epoxidharzen auf Bisphenol A-Basis sehr kurze Verarbeitungszeiten aufweisen. Dadurch werden die Applikationsmöglichkeiten bei der Herstellung lösungsmittelfreier Anstriche eingeschänkt. Eine einkomponentige Auftragung von Hand mit Pinsel oder Rolle ist erschwert. Ein überraschender Vorteil der erfindungsgemäßen Härter besteht darin, daß sie bei vergleichbarer Härtungsgeschwindigkeit wie konventionelle Mannichbasen eine deutlich längere Verarbeitungszeit besitzen. Damit sind die Verarbeitungsmöglichkeiten im Anstrichsektor erheblich verbessert.

Ein weiterer Vorteil liegt in der Phenolfreiheit der erfindungsgemäßen Härter. Unter toxikologischen Gesichtspunkten ist dieser Vorteil bei der Giftigkeit des Phenols besonders hoch zu bewerten.

Es werden nicht nur die Handhabbarkeit und Transport ungefährlicher. Aus Duromeren, die

mit konventionellen, phenolhaltigen Tieftemperaturhärtern hergestellt werden, läßt sich mit Wasser abhängig von dessen Temperatur und Einwirkungsdauer eine mehr oder weniger große Menge Phenol extrahieren. Der Einsatz solcher Produkte im Trinkwasser- oder Lebensmittelsektor ist damit nicht angezeigt. Die erfindungsgemäßen Produkte sind dagegen im Trinkwasser- und Lebensmittelsektor mit Vorteil einzusetzen.

Die mit den erfindungsgemäßen Härtern erzielbare Wirkung, basierend auf deren inneren Beschleunigung, war nicht voraussehbar, da allein durch physikalische Mischungen der einzelnen Komponenten keine Verbesserung in Richtung auf den gefundenen Effekt zu erzielen ist.

Die erfindungsgemäß mitverwendeten Glycidylverbindungen sind handelsübliche Produkte mit mehr als einer Epoxidgruppe pro Molekül, die sich von ein- und mehrwertigen, ein- und mehrkernigen Phenolen, insbesondere Bisphenolen, sowie Novolaken ableiten. Eine umfangreiche Aufzählung dieser Di- oder Polyphenole findet sich in dem Handbuch "Epoxidverbindungen und Epoxidharze" von A. M. Paquin, Springer Verlag, Berlin, 1958, Kapitel IV, und Lee, Neville "Handbook of Epoxy Resins, 1967, Chapter 2.

Es können auch Mischungen von zwei und mehreren der Epoxidharze untereinander verwendet werden. Bevorzugt werden Glycidylverbindungen auf Basis von Bisphenol A (4,4 - Dihydroxy - diphenylpropan - 2,2) mit Epoxidwerten von 0,4 bis 0,55 eingesetzt.

Es können auch Mischungen der Glycidylverbindungen mit sogenannten reaktiven Verdünnern, wie z. B. Monoglycidyläthern von Phenolen, verwendet werden. Diese reaktiven Verdünner dienen in erster Linie zur Viskositätsreduzierung und sollten, da sie die Endeigenschaften des Duromern ungünstig beeinflussen, nur in geringen Mengen mitverwendet werden.

Die beispielsweise genannten Glycidylverbindungen können sowohl für die härtbaren Kombinationen, als auch zur Herstellung der im erfindungsgemäßen Verfahren ebenfalls einsetzbaren Härtungsmittel - Epoxid - Addukte verwendet werden (vgl. S. 7, Abs. 3).

Härtungsmittel und Glycidylverbindungen werden in dem erfindungsgemäßen Verfahren vorzugsweise in etwa äquivalenten Mengen, d. h. bezogen auf aktive Aminwasserstoffatome und reaktive Epoxidgruppen eingesetzt. Es ist aber auch möglich, Härtungsmittel oder Glycidylkomponente im Über- bzw. Unterschuß zu verwenden. Die jeweiligen Mengen richten sich nach den gewünschten Endeigenschaften des Reaktionsproduktes. Übliche katalytische oder reaktive Härter für Epoxidharze können in dem erfindungsgemäßen Verfahren mitverwendet werden.

In der Regel wird man dabei so verfahren, daß man die erfindungsgemäßen Härter und die üblichen Härter in dem gewünschten Verhältnis getrennt oder als Mischung der Epoxidverbindung zusetzt.

Man kann aber auch bei der Herstellung des erfindungsgemäßen Härters das Verhältnis der an der Reaktion beteiligten Komponenten so wählen, daß in der Reaktionsmischung neben dem erfindungsgemäßen Härter noch die Komponente vorliegt, die als Co-Härter fungieren soll.

Der besondere Vorteil der erfindungsgemäßen Härtungsmittel liegt in ihrem ausgezeichneten Härtungsverhalten bei Temperaturen um etwa 5°C und hohen relativen Luftfeuchtigkeitswerten bei ca. 95%. Dies schließt eine Verwendung bei Raum- oder erhöhten Temperaturen, allein oder unter Mitverwendung auf diesem Gebiet gebräuchlicher Härter, insbesondere der Amin- oder Aminoamidhärter, nicht aus.

Je nach anwendungsgebiet und Verwendungszweck können in den erfindungsgemäßen Epoxidharz/Härtungsmittel-Mischungen anorganische und/oder organische Zusätze wie feinteilige Sande, Talk, Kieselsäure, Tonerde, Metalle oder Metallverbindungen in Span- und Pulverform, thixotropierende Mittel, faserartige Stoffe wie z. B. Asbest und Glasstapelfasern, Pigmente, flammverzögernde Stoffe, Lösungsmittel, Farbstoffe, Weichmacher, Bitumen, Mineralöle, zugesetzt werden.

Beispiel 1

400 g eines auf Basis monomerer Fettsäure und Triäthylentetramin hergestellten imidazolinhaltigen Aminoamids mit der Aminzahl 375 werden mit 265 g (1 Mol) Tri - (dimethylaminomethyl) - phenol (im folgenden DMP 30 abgekürzt) auf 145°C erhitzt. Nach 90 Minuten haben sich 45 g (1 Mol) Dimethylamin abgespalten. Die Reaktion wird abgebrochen. Es resultiert ein Produkt mit folgenden Kennzahlen:

| | |
|---|---|
| Aminzahl | 323 |
| Visk. 25°C | 8,1 Pa . s |

Beispiel 2

240 g Aminoamid wie in Beispiel 1 mit der Aminzahl 375 werden mit 80 g (0,3 Mol) DMP 30 auf ca. 145°C erhitzt. Nachdem sich 27 g (0,6 Mol) Dimethylamin abgespalten haben (ca. 40 Min.), wird die Reaktion abgebrochen. Das resultierende Produkt hat folgende Kenndaten:

| | |
|---|---|
| Aminzahl | 344 |
| Visk. 25°C | 11,2 Pa . s |

Beispiel 3

240 g Aminoamid wie in Beispiel 1 werden mit 53 g (0,2 Mol) DMP 30 umgesetzt. Nach 2 Stunden haben sich 27 g (0,6 Mol) Dimethylamin abgespalten. Das resultierende Produkt hat folgende Kennzahlen:

| | |
|---|---|
| Aminzahl | 385 |
| Visk. 25°C | 22,9 Pa . s |

Beispiel 4

200 g eines auf Basis dimerer Fettsäure und Triäthylentetramin hergestellten Aminoamids mit der Aminzahl 385 werden mit 37 g (0,14 Mol) DMP 30 auf 140°C erhitzt. Nach 20 Minuten (abgespaltene Menge) Dimethylamin 10 g (0,22 Mol) wird die Reaktion abgebrochen. Das resultierende Produkt hat die Kenndaten:

| | |
|---|---|
| Aminzahl | 372 |
| Visk. 75°C | 14,4 Pa . s |

Beispiel 5

200 g eines auf Basis $C_8$—$C_{10}$Monocarbonsäure und Tetraäthylenpentamin hergestellten Aminoamids mit der Aminzahl 460 werden ca. 30 Minuten mit 132 g (0,5 Mol) DMP 30 auf 140°C erhitzt. Nachdem 23 g (0,5 Mol) Dimethylamin abdestilliert sind, wird die Reaktion abgebrochen. Das resultierende Produkt hat folgende Kenndaten:

| | |
|---|---|
| Aminzahl | 418 |
| Visk. 25°C | 62,4 Pa . s |

Beispiel 6

180 g eines handelsüblichen Aminoamids auf Basis styrolisierter Fettsäure mit einer Aminzahl von 425 werden mit 133 g (0,5 Mol) DMP 30 auf 145°C erhitzt. Nach 15 Minuten haben sich 23 g (0,5 Mol) Dimethylamin abgespalten. Die Reaktion wird abgebrochen.

Das resultierende Produkt hat die Analysenwerte:

| | |
|---|---|
| Aminzahl | 429 |
| Visk. 25°C | 99,4 Pa . s |

Beispiel 7

Es wurden 138 g eines Aminoamids aus ε-Aminocapronsäure und Trimethylhexamethylendiamin mit einer Aminzahl von 363 und einer Viskosität von 1,55 Pa . s/25°C umgesetzt mit 26,5 g (0,1 Mol)) DMP 30. Bei 140°C spalten sich innerhalb von ca. 20 Minuten 4,5 g (0,1 Mol) Dimethylamin ab. Die Reaktion wird abgebrochen. Das resultierende Produkt hat die Analysenwerte:

| | |
|---|---|
| Aminzahl | 371 |
| Visk. 25°C | 11,6 Pa . s |

Beispiel 8

66 g (0,52 Mol) 2 - Methyl - 3 - aminoäthylimidazolin wurden mit 92 g (0,35 Mol) DMP 30 auf 140°C erwärmt. Innerhalb von 15 Minuten spalten sich 15,6 g (0,235 Mol) Dimethylamin ab. Nach dem Abkühlen erhält man ein mittelviskoses Harz.

| | |
|---|---|
| Aminzahl | 618 |
| Visk., 75°C | 1,1 Pa . s |

Beispiel 9

40 g eines Aminoamids auf Basis monomerer Fettsäure und Triäthylenetetramin mit einer Aminzahl von 375 werden mit 46 g (0,1 Mol) Tetra-(dimethylaminomethyl) Bisphenol A auf 150°C erhitzt. Innerhalb von 20 Minuten werden 4,5 g (0,1 Mol) Dimethylamin abgespalten. Das resultierende Produkt hat die Analysenwerte

| | |
|---|---|
| Aminzahl | 375 |
| Visk. 75°C | 14,9 Pa . s |

Beispiel 10

200 g des Aminoamids wie Beispiel 9 werden mit 167 (0,5 Mol) Bis - (dimethylaminomethyl) - nonylphenol bei 150—170°C umgesetzt. Nach 1 Stunde haben sich 19 g (0,42 Mol) Dimethylamin abgespalten. Die Reaktion wird beendet. Das resultierende Produkt hat die Analysenwerte:

| | |
|---|---|
| Aminzahl | 263 |
| Visk. 25°C | 4,1 Pa . s |

Beispiel 11

220 g eines aminoamids auf Basis $C_{18}$-Monocarbonsäure, Tetraäthylenpentamin und eines Polypropylenpolyamingemisches mit einer Aminzahl von 370 werden mit 132 g (0,5 Mol) DMP 30 solange erhitzt, bis sich 24 g (0,53 Mol) Dimethylamin abgespalten haben. Nach dem Abkühlen erhält man ein Produkt mit der

| | |
|---|---|
| Aminzahl | 397 |
| Visk. 25°C | 33,8 Pa . s |

Beispiel 12

Es wurde ein Aminoamid aus einer durch Addition von Acrylsäure an ungesättigte Fettsäure erhaltenen Dicarcarbonsäure mit der Säurezahl von 290 und Triäthylentetramin hergestellt, das eine Aminzahl von 522 hat. 160 g dieses Aminoamids und 36 g (0,13 Mol) DMP 30 werden auf ca. 140°C erhitzt. Im Verlauf von Minuten spalten sich 6 g (0,13 Mol) Dimethylamin ab. Das Produkt weist die folgenden Werte auf:

| | |
|---|---|
| Aminzahl | 500 |
| Visk. 25°C | 480 Pa s |

Beispiel 13

186 g Produkt gemäß Beispiel 1 werden mit 14 g Phenylglycidyläther zu einem Aminoamidaddukt umgesetzt.

| | |
|---|---|
| Aminzahl | 360 |
| Visk. 25°C | 12,9 Pa . s |

Beispiel 14

186 g Produkt gemäß Beispiel 1 werden mit 17 g Dianharz auf Bisphenol A-Basis mit einem Epoxid-Äquivalentgewicht von 190 zu einem Addukt umgesetzt.

| | |
|---|---|
| Aminzahl | 350 |
| Visk. | 94,3 Pa . s |

Beispiel 15

Durch Mischung von 42,5 Gewichtsteilen des Produkts gemäß Beispiel 1, 42,5 Gewichtsteilen Aminoamid aus dimerisierter Fettsäure und Triäthylentetramin mit der Aminzahl 390 und 15 Gewichtsteilen Benzylalkohol (Verdünner) erhält man einen Härter mit der Aminzahl 300 und der Viskosität 3,4 Pa . s/25°C.

100 g dieses Härters werden mit 100 g Epoxidharz vom Epoxidäquivalentgewicht 190 gemischt und als dünner Film aufgetragen.

Es ergibt sich folgendes Eigenschaftsbild bei Härtung bei

| Raumtemperatur | |
|---|---|
| Verlauf | gut |
| Klebrigkeit nach 1 Tag | klebfrei |
| Aussehen | Glanz |
| Buchholzhärte nach 1 Tag | 100 |
| Buchholzhärte nach 7 Tagen | 100 |
| Erichsentiefung nach 7 Tagen | 7 |
| **einer Temperatur von 5°C** | |
| Buchholzhärte nach 1 Tag | 35 |
| Buchholzhärte nach 7 Tagen | 83 |

Der Film ist beständig gegen Wasser, 10%ige Natronlauge, Toluol, unbeständig gegen Methanol, Äthanol und 5%ige Essigsäure.

Beispiel 16

398 g (1,5 Mol) DMP 30 und 270 g (4,5 Mol) Äthylendiamin werden 120°C erhitzt. Siedendes Äthylendiamin wird durch einen auf 50°C erhitzten Fraktionieraufsatz kondensiert, Dimethylamin wird in einer Kältefalle ausgefroren. Nachdem 196 g (97% d. Th.) Dimethylamin abgespalten sind (nach 5 Stunden), wird abgebrochen. Der Rückstand hat folgende Analysenwerte: Aminzahl 990, Viskosität bei 25°C: 30 Pa . s.

Beispiel 17

87 g (0,33 Mol) DMP 30 und 204 g (1 Mol) Bis - (Aminopropoxy)butan werden 2 Stunden auf 140°C bis 180°C erhitzt. Nach Abspaltung von 43 g (96% d. Th.) Dimethylamin liegt ein Produkt mit einer Aminzahl von 440, einer Viskosität bei 25°C von 3,5 Pa . s vor.

Beispiel 18

265 g (1 Mol) DMP 30 und 387 g (3 Mol) N-Aminoäthylpiperazin werden 2 Stunden auf 130°C bis 160°C erhitzt. Nach Abspaltung von 135 g (100% d. Th.) Dimethylamin erhält man bei Raumtemperatur hochviskoses Produkt mit der Aminzahl 645.

Beispiel 19

528 g (2,5 Mol) Bis-(dimethylaminoethyl)-phenol werden mit 480 g (8,0 Mol) Äthylendiamin auf maximal 130°C erhitzt. Es werden 336 g Destillat aufgefangen. Anschließend zieht man bei 70°C/3 mm überschüssiges Äthylendiamin ab. Es verbleibt ein Produkt mit der Aminzáhl 780 und einer Viskosität von 8,7 Pa . s bei 25°C.

Beispiel 20

105 g (0,5 Mol) Bis(dimethylaminomethyl)-phenol werden mit 131 g (1 Mol) Dipropylentriamin innerhalb 2 Stunden bis auf 180°C erhitzt. In einer nachgeschalteten Kühlfalle hängt man 44 g (98% d. Th.) Dimethylamin auf. Das erhaltene Produkt hat eine Aminzahl von 865 und eine Viskosität von 3,3 Pa.s bei 25°C.

Beispiel 21

136 g (1 Mol) Xylylendiamin und 105 g (0,5 Mol) Bis(dimethylaminomethyl)phenol werden 1 Stunde auf 155°C° erhitzt, bis sich 44 g (98% d. Th.) Dimethylamin abgespalten haben. Das resultierende Produkt hat eine Aminzahl von 560 und eine Viskosität von 160 Pa . s bei 25°C.

Beispiel 22

137 g eines Gemisches aus Aminopropyläthylendiamin und Bis(aminopropyl)äthylendiamin werden entsprechend den vorangegangenen Beispielen mit 105 g Bis(dimethylaminomethyl)phenol umgesetzt, bis 41 g (91% d. Th.) Dimethylamin freigesetzt sind. Das Produkt hat eine Aminzahl von 940 und eine Viskosität von 3,8 Pa . s bei 25°C.

Beispiel 23

174 g (1,5 Mol) Hexamethylendiamin und

212 g (1 Mol) Bis(dimethylaminomethyl)-phenol werden 40 Minuten auf 140—160°C erhitzt. Nachdem 67 g (75% d. Th.) abgespalten sind, wird die Reaktion abgebrochen. Das resultierende Produkt hat eine Viskosität von 3,0 Pa . s bei 25°C und eine Aminzahl von 615.

Beispiel 24

306 g (1,5 Mol) 1,4-Bis(Aminopropoxyl)-butan und 265 g (1 Mol) DMP 30 werden solange bei 170°C umgesetzt (45 Minuten), bis 67 g (50% d. Th.) Dimethylamin abgespalten sind. Das nach Unterbrechung der Reaktion erhältliche Produkt hat eine Aminzahl von 460 und eine Viskosität von 2,7 Pa . s 25°C.

Beispiel 25

180 g eines äquimolekularen Gemisches aus Dimethylaminomethylphenols und Bis-(dimethylaminomethyl)phenol werden mit 197 g (1,5 Mol) Dipropylendiamin auf maximal 130°C erhitzt. Nach 2 Stunden haben sich 67 g (100% d. T.) Dimethylamin abgespalten. Das resultierende Produkt hat eine Aminzahl von 811 und eine Viskosität von 1,5 Pa.s bei 25°C.

VERGLEICHSTABELLE

| | Phenolgehalt % | Topfzeit Min. | Härte nach Buchholz nach 1 Tag bei 5°C/95 % rel.Feuchte |
|---|---|---|---|
| erfindungsgem. | | | |
| Beispiel 16 | 0 | 30 | ca. 30 |
| Vergleich A | 5 | 27 | nicht meßbar |
| Beispiel 19 | <1 | 35 | ca. 30 |
| Vergleich B | 19 | 22 | nicht meßbar |
| Beispiel 25 | 3 | 32 | ca. 30 |
| Vergleich C | 19 | 17 | 50 |

Vergleich A hergestellt aus 1 Mol Phenol, 3 Mol EDA und 3 Mol Formaldehyd

Vergleich B hergestellt aus 1 Mol Phenol, 2 Mol EDA und 2 Mol Formaldehyd

Vergleich C hergestellt aus 1 Mol Phenol, 1 Mol Dipropylentriamin und 1 Mol Formaldehyd.

**Patentansprüche**

1. Verfahren zur Herstellung von Epoxid-Polyaddukten unter Formgebung durch Umsetzen von Epoxidverbindungen, die im Molekül im Durchschnitt mehr als eine Epoxidgruppe aufweisen, mit Aminoamidverbindungen und/oder Aminoimidazolinverbindungen und/oder imidazolingruppenhaltigen Aminoamidverbindungen und/oder Polyaminen als Härtungsmitteln, gegebenenfalls unter Mitverwendung üblicher Lösungsmittel, Pigmente, Füll-, Hilfs- und Modifizierungsmitteln, dadurch gekennzeichnet, daß als Härtungsmittel Substitutionsprodukte verwendet werden, die hergestellt worden sind durch Umsetzung von

A) Aminoamidverbindungen und / oder Aminoimidazolinverbindungen und/oder imidazolingruppenhaltigen Aminoamidverbindungen und/oder Polyaminverbindungen mit

B) Mannichbasen, hergestellt durch Umsetzung von
   b 1) Formaldehyd und
   b 2) Mono- und/oder Polyphenolen und
   b 3) sekundären Aminen

unter Aminaustausch und Abspaltung von sekundärem Amin.

2. Verfahren gemäß Anspruch 1, dadurch gekennzeichnet, daß die Aminoamidverbindungen und/oder Aminoimidazolinverbindungen und/oder imidazolingruppenhaltigen Aminoamidverbindungen gemäß A Kondensationsprodukte sind aus

s 1) Monocarbonsäuren mit 2 bis 22 Kohlenstoffatomen und/oder

s 2) Polymerisationsprodukten ungesättigter höherer Fettsäure mit 16—22 Kohlenstoffatom und/oder

s 3) Copolymerisaten ungesättiger Fettsäuren mit 16—22 Kohlenstoffatomen mit aromatischen Vinylverbindungen und/oder

s 4) Addukten aus ungesättigten Fettsäuren mit ungesättigten niederen Mono- und Dicarbonsäuren und/oder

s 5) Säuren, die durch Umsetzung von ungesättigten Fettsäuren mit CO und Wasser hergestellt werden und/oder

s 6) epoxidierten ungesättigten höheren Fettsäuren und/oder

s 7) aliphatischen, hydroaromatischen, araliphatischen und aromatischen Di- und Polycarbonsäuren mit 6—36 Kohlenstoffatomen und/oder

s 8) Säuren, die durch Addition von Phenolen an ungesättigte Mono- und/oder Dicarbonsäuren hergestellt werden und/oder

s 9) Aminosäuren bzw. Lactamen
und aus

p 1) Polyäthylenpolyaminen und/oder
p 2) Polypropylenpolyaminen und/oder
p 3) aliphatischen Polyaminen und/oder
p 4) cycloaliphatischen Polyaminen und/oder
p 5) heterocyclischen Polyaminen und/oder
p 6) Polätheraminen

im Verhältnis von Aminogruppen zu Carboxylgruppen von >1.

3. Verfahren gemäß Anspruch 1, dadurch gekennzeichnet, daß die Polyamine gemäß A)
p' 1) Polyäthylenpolyamine und/oder
p' 2) Polypropylenpolyamine sowie die durch Cyanäthylierung von Polyaminen, insbesondere des Äthylendiamins, und anschließende Hydrierung erhaltene Polyamine und/oder
p' 3) aliphatische Polyamine und/oder
p' 4) cycloaliphatische Polyamine und/oder
p' 5) heterocyclische Polyamine und/oder
p' 6) Polyätheramine und/oder
p' 7) Polyätherpolyamine der allgemeinen Formel

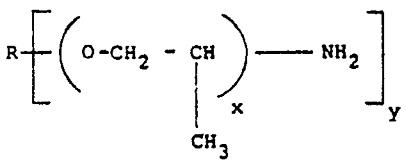

in welcher x $\geqq$ 2, y = 2,3,4 und R ein Kohlenwasserstoffrest mit einer Wertigkeit entsprechend y ist und/oder
p' 8) aromatische Amine sind.

4. Verfahren gemäß den Ansprüchen 1 bis 3, dadurch gekennzeichnet, daß die Mannichbasen B) Kondensationsprodukte sind aus
b 1) Formaldehyd und
b 2) Phenol oder 4,4' - Dihydroxydiphenylpropan - 2,2 und
b 3) Dimethylamin.

5. Verfahren gemäß den Ansprüchen 1 bis 4, dadurch gekennzeichnet, daß die Umsetzungsprodukte aus A) und B) noch mindestens eine tertiäre Amingruppe enthalten.

6. Verfahren gemäß den Ansprüchen 1 bis 5, dadurch gekennzeichnet, daß zusätzlich zu den erfindungsgemäßen Härtungsmitteln übliche aminische Härtungsmittel mitverwendet werden.

7. Härtungsmittel für das Verfahren gemäß den Ansprüchen 1 bis 6, bestehend aus Umsetzungsprodukten aus A) und B) unter Aminaustausch und Abspaltung von sekundären Aminen.

8. Härtungsmittel gemäß Anspruch 7, wobei A) die in den Ansprüchen 2 und 3 und B) die im Anspruch 4 angegebenen näheren Bedeutungenhaben.

9. Härtungsmittel gemäß den Asnprüchen 7 bis 8, dadurch gekennzeichnet, daß die Umsetzungsprodukte aus A) und B) noch mindestens eine tertiäre Amingruppe enthalten.

10. Härtungsmittel gemäß Anspruch 7, bestehend aus Mischungen aus Härtungsmitteln gemäß den Ansprüchen 7 bis 9 und übliche aminischen Härtungsmitteln.

## Claims

1. Process for the manufacture of epoxy polyadducts while shaping, by reacting epoxy compounds that have on average more than one epoxy group per molecule with aminoamide compounds and/or aminoimidazoline compounds and/or imidazoline group-containing aminoamide compounds and/or polyamines as hardening agents, optionally with the concomitant use of conventional solvents, pigments fillers, auxiliaries and modifying agents, characterised in that there are used as hardening agents substitution products that are manufactured by reacting
A) aminoamide compounds and/or aminoimidazoline compounds and/or imidazoline group-containing aminoamide compounds and/or polyamine compounds with
B) Mannich bases manufactured by reacting
b 1) formaldehyde and
b 2) mono- and/or polyphenols and
b 3) secondary amines
with amine exchange and the splitting-off of secondary amine.

2. Process according to claim 1, characterised in that the aminoamide compound and/or aminoimidazoline compounds and/or imidazoline-group containing aminoamide compounds according to A are condensation products of
s 1) monocarboxylic acids having from 2 to 22 carbon atoms and/or
s 2) polymerisation products of unsaturated higher fatty acids having from 16 to 22 carbon atoms and/or
s 3) copolymers of unsaturated fatty acids having from 16—22 carbon atoms with aromatic vinyl compounds and/or
s 4) adducts of unsaturated fatty acids with unsaturated lower mono- and dicarboxylic acids and/or
s 5) acids that are manufactured by reacting unsaturated fatty acids with CO and water and/or
s 6) epoxidised unsaturated higher fatty acids and/or
s 7) aliphatic, hydroaromatic, araliphatic and aromatic di- and polycarboxylic acids having from 6—36 carbon atoms and/or
s 8) acids that are produced by the addition of phenols to unsaturated mono- and/or dicarboxylic acids and/or
s 9) amino acids or lactams
and
p 1) polyethylenepolyamines and/or
p 2) polypropylenepolyamines and/or
p 3) aliphatic polyamines and/or

p 4) cycloaliphatic polyamines and/or
p 5) heterocyclic polyamines and/or
p 6) polyether amines
in the ratio of amino groups to carboxyl groups of $>1$.

3. Process according to claim 1, characterised in that the polyamines according to A) are
p' 1) polyethylenepolyamines and/or
p' 2) polypropylenepolyamines and also the polyamines obtained by the cyanoethylation of polyamines, especially ethylenediamine, and subsequent hydrogenation, and/or
p' 3) aliphatic polyamines and/or
p' 4) cycloaliphatic polyamines and/or
p' 5) heterocyclic polyamines and/or
p' 6) polyether amines and/or
p' 7) polyether polyamines of the general formula

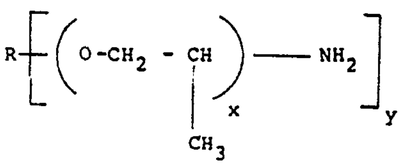

in which $x \geqq 2$, $y = 2$, 3, or 4 and R is a hydrocarbon radical having a valency corresponding to y and/or p' 8) aromatic amines.

4. Process according to claims 1 to 3, characterised in that the Mannich bases B) are condensation products of
b 1) formaldehyde and
b 2) phenol or 2,2-(4,4' - dihydroxydiphenyl) - propane and
b 3) dimethylamine.

5. Process according to claims 1 to 4, characterised in that the reaction products of A) and B) still contain at least one tertiary amino group.

6. Process according to claims 1 to 5, characterised in that in addition to the hardening agents according to the invention conventional amine hardening agents are used concomitantly.

7. Hardening agent for the process according to claims 1 to 6, consisting of reaction products of A) and B) with amine exchange and the splitting-off of secondary amines.

8. Hardening agent according to claim 7, in which A) has the detailed meanings given in claims 2 and 3, and B) has the detailed meanings given in claim 4.

9. Hardening agent according to claims 7 and 8, characterised in that the reaction products of A) and B) still contain at least one tertiary amino group.

10. Hardening agent according to claim 7, consisting of mixtures of hardening agents according to claims 7 to 9 and conventional amine hardening agents.

**Revendications**

1. Procédé pour préparer, en même temps qu'on les met en forme, des produits de polyaddition d'époxydes par réaction de composés époxydiques contenant en moyenne, dans leur molécule, plus d'un groupe époxy, avec, comme durcisseurs, des composés amino-amidiques et/ou des composés amino-imidazoliniques et/ou des composés amino-amidiques contenant des radicaux d'imidazoline et/ou des polyamines, éventuellement avec emploi simultané de solvants, pigments, charges, adjuvants et modificateurs usuels, procédé caractérisé en ce qu'on utilise, comme durcisseurs, des produits de substitution que l'on on a préparé en faisant réagir:
A) des composés amino-amidiques et/ou des composés amino-imidazoliniques et/ou des composés amino-amidiques renfermant des radicaux d'imidazoline et/ou des composés polyaminés, avec
B) des bases de Mannich qui ont été préparées par réaction:
b 1) du formaldéhyde et
b 2) de mono- et/ou polyphénols et
b 3) d'amines secondaires
réaction reposant sur un échange d'amines et un enlèvement d'amine secondaire.

2. Procédé selon la revendication 1, caractérisé en ce que les composés amino-amidiques et/ou les composés amino-imidazoliniques et/ou les composés amino-amidiques renfermant un radical d'imidazoline selon A) sont des produits de condensation:
s 1) d'acides monocarboxyiiques contenant de à 22 atomes de carbone et/ou
s 2) de produits de polymérisation d'acides gras insaturés supérieurs contenant de 16 à 22 atomes de carbone et/ou
s 3) de copolymères d'acides gras insaturés contenant de 16 à 22 atomes de carbone avec des composés vinyliques aromatiques et/ou
s 4) de produits d'addition d'acides gras insaturés avec des acides mono- et dicarboxyliques inférieurs insaturés et/ou
s 5) d'acides qui sont préparés par réaction d'acides gras insaturés avec CO et l'eau, et/ou
s 6) d'acides gras supérieurs insaturés époxydés et/ou
s 7) d'acides di- et poly-carboxyliques aliphatiques, hydro-aromatiques, aliphatiques et aromatiques contenant de 6 à 36 atomes de carbone et/ou
s 8) d'acides qui sont préparés par addition de phénols sur des acides mono- et/ou dicarboxyliques insaturés et/ou
s 9) d'amino-acides ou de lactames
et :
p 1) de polyéthylène-polyamines et/ou
p 2) de polypropylène-polyamines et/ou
p 3) de polyamines aliphatiques et/ou
p 4) de polyamines cycloaliphatiques et/ou
p 5) de polyamines hétérocycliques et/ou
p 6) de polyéther-amines
dans un rapport molaire des groupes amino aux

groupes carboxy supérieur à 1.

3. Procédé selon la revendication 1, caractérisé en ce que les polyamines selon A) sont:

p' 1) des polyéthylène-polyamines et/ou

p' 2) des polypropylène-polyamines ainsi que les polyamines obtenues par cyanéthylation de polyamines, plus spécialement de l'éthylène-diamine, suivie d'une hydrogénation, et/ou

p3) des polyamines aliphatiques et/ou

p' 4) des polyamines cycloaliphatiques et/ou

p' 5) des polyamines hétérocycliques et/ou

p' 6) des polyéther-amines et/ou

p' 7) des polyéther-polyamines répondant à la formule générale

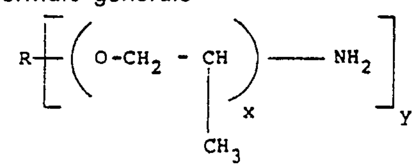

dans laquelle x est supérieur ou égal à 2, Y est égal à 2, 3 ou à 4 et R représente un radical hydrocarboné dont la valence est égale à y, et/ou

p' 8) des amines aromatiques.

4. Procédé selon l'une quelconque des revendications 1 à 3, caractérisé en ce que les bases de Mannich B) sont des produits de condensation:

b 1) du formaldéhyde et

b 2) du phénol ou du bis - (hydroxy - 4 - phényl) - 2,2 propane et

b 3) de la diméthylamine.

5. Procédé selon l'une quelconque des revendications 1 à 4, caractérisé en ce que les produits de réaction de A) et B) contiennent encore au moins un groupe amino tertiaire.

6. Procédé selon l'une quelconque des revendications 1 à 5, caractérisé en ce qu'en plus des durcisseurs conformes à l'invention on utilise en même temps des durcisseurs aminés usuels.

7. Durcisseurs pour le procédé selon l'une quelconque des revendications 1 à 6, constitués de produits résultant de la réaction de A) et B) avec échange d'amines et enlèvement d'amines secondaires.

8. Durcisseurs selon la revendication 7, caractérisés ce que A) a les significations données aux revendications 2 et 3 et B) a les significations données à la revendication 4.

9. Durcisseurs selon l'une des revendications 7 et 8, caractérisés en ce que les produits de réaction de A) et B) contiennent encore au moins un groupe amino tertiaire.

10. Durcisseurs selon la revendication 7, qui sont constitués de mélanges de durcisseurs selon l'une quelconque des revendications 7 à 9 et de durcisseurs aminés usuels.